# EUROPEAN PATENT APPLICATION

(11) **EP 4 491 451 A1**
(43) Date of publication of application: **15.01.2025**
(21) Application number: 24186562.5
(22) Date of filing: 04.07.2024
(51) Int. Cl.: B60N 2/02, B60N 2/60, B60N 2/58, B60N 2/30, B60R 22/22, B60R 22/26

(54) **VEHICLE SEAT STRUCTURE**

(30) Priority: 14.07.2023 JP 2023115839
(71) Applicant: Suzuki Motor Corporation, Shizuoka 432-8611 (JP)
(72) Inventor: KATO, Keita, Hamamatsu, 432-8611 (JP)
(74) Representative: Horn Kleimann Waitzhofer Schmid-Dreyer Patent- und Rechtsanwälte PartG mbB

(57) **Abstract**

To more reliably protect a cord-shaped structure routed from a buckle provided on a seat section that moves when a seat back is inclined forward, a vehicle seat structure includes: a seat (100) including a seat section (106) and a seat back (108); a movement mechanism (112) for inclining the seat back (108) forward and moving the seat section (106) forward and downward; a buckle (120) that is disposed on a lateral side of the seat section (106) and to which a tongue of a seat belt can be attached; and a wire harness (122) routed from the buckle (120) toward a floor panel (104). The vehicle seat structure further includes a flexible belt-shaped restriction member (130) covering the buckle (120) in a front-rear direction and fixed to the lateral side of the seat section (106) in front of and behind the buckle (120) to restrict the buckle (120) to the lateral side of the seat section (106).

## Description

### FIELD OF THE INVENTION

The present invention relates to a vehicle seat structure.

### BACKGROUND OF THE INVENTION

A vehicle may be provided with a seat belt reminder function that gives an alarm, for example, to indicate that an occupant seated on a vehicle seat is not wearing a seat belt by using a detection device for detecting whether or not the seat belt in the vehicle is worn.

In Patent Document 1, for example, the above-described detection is performed by transmitting a signal from a buckle switch installed in a lap-side buckle via a wire harness to an ECU (Electronic Control Unit).

On the other hand, there is a technology for moving a seat cushion forward and downward when a seat back of a rear seat is inclined forward, in order to secure a wide space behind a front seat.

### PRIOR ART DOCUMENT

### Patent Document

[Patent Document 1: JP 2011-126358A

### SUMMARY OF THE INVENTION

### Problems to be Solved by the Invention

When a seat cushion configured to move as described above is provided with a buckle to which a cord-shaped structure such as a wire harness for detecting whether or not a seat belt is worn is connected, the following problems occur. That is to say, when the seat cushion moves, the wire harness may come into contact with nearby members and may be damaged or deteriorate.

Moreover, when the seat cushion moves, the position of the buckle provided on the seat cushion naturally changes, and the buckle may be unexpectedly displaced from its predetermined position on the seat cushion. In such a case as well, the cord-shaped structure such as a wire harness may come into contact with nearby members and be damaged, or the cord-shaped structure may deteriorate due to localized concentration of stress on the cord-shaped structure.

In view of the above problems, an object of the present invention is to provide a vehicle seat structure that can more reliably protect a cord-shaped structure routed from a buckle provided on a seat cushion that moves forward and downward when a seat back is inclined forward.

### Means to Solve the Problems

In order to solve the above-described problems, a representative configuration of the present invention is a vehicle seat structure including: a seat including a seat section on which an occupant of a vehicle sits and a seat back arranged upright from a rear portion of the seat section to support the back of the occupant; a movement mechanism for inclining the seat back forward and moving the seat section forward and downward; and a buckle that is disposed on a lateral side of the seat section and to which a tongue of a seat belt for the occupant can be attached, the vehicle seat structure being characterized in further including: a cord-shaped structure routed from the buckle toward a floor panel; and a flexible guide member extending beside the cord-shaped structure from the buckle to the floor panel to guide a route of the cord-shaped structure.

In order to solve the above-described problems, a representative configuration of the present invention is a vehicle seat structure including: a seat including a seat section on which an occupant of a vehicle sits and a seat back arranged upright from a rear portion of the seat section to support the back of the occupant; a movement mechanism for inclining the seat back forward and moving the seat section forward and downward; a buckle that is disposed on a lateral side of the seat section and to which a tongue of a seat belt for the occupant can be attached; and a cord-shaped structure routed from the buckle toward a floor panel, the vehicle seat structure being characterized in further including a flexible belt-shaped restriction member covering the buckle in a front-rear direction and fixed to the lateral side of the seat section in front of and behind the buckle to restrict the buckle to the lateral side of the seat section.

### EFFECT OF THE INVENTION

According to the present invention, it is possible to provide a vehicle seat structure that can more reliably protect a cord-shaped structure routed from a buckle provided on a seat section that moves forward and downward when a seat back is inclined forward.

### BRIEF EXPLANATION OF THE DRAWINGS

FIG. 1 is a perspective view showing an embodiment of a vehicle seat structure according to the present invention.
FIG. 2 is a side view showing a state before a seat back of a seat shown in FIG. 1 is inclined forward and a state after the seat back is inclined forward.
FIG. 3 is a perspective view and an enlarged partial view of the seat shown in FIG. 1.
FIG. 4 is a perspective view and an enlarged partial view of the seat in a state where a seat section has moved forward and downward as shown in the left part of FIG. 2.
FIG. 5 is a cross-sectional view of the seat taken along the line A-A in FIG. 4.
FIG. 6 is a perspective view showing an internal structure of the seat shown in FIG. 3.
FIG. 7 is a perspective view showing a guide member in a state before the seat section moves forward and downward and a state after the seat section moves forward and downward as shown in FIG. 2.
FIG. 8 is a plan view showing a wire harness and the guide member shown in FIG. 7(a) as viewed from above.
FIG. 9 is a perspective view showing the wire harness and the guide member shown in FIG. 8 as viewed from a different direction.

### EMBODIMENTS OF THE INVENTION

An embodiment of the present invention is a vehicle seat structure including: a seat including a seat section on which an occupant of a vehicle sits and a seat back arranged upright from a rear portion of the seat section to support the back of the occupant; a movement mechanism for inclining the seat back forward and moving the seat section forward and downward; and a buckle that is disposed on a lateral side of the seat section and to which a tongue of a seat belt for the occupant can be attached, the vehicle seat structure being characterized in further including: a cord-shaped structure routed from the buckle toward a floor panel; and a flexible guide member extending beside the cord-shaped structure from the buckle to the floor panel to guide a route of the cord-shaped structure.

According to the present invention, the flexible guide member extends beside the cord-shaped structure from the buckle to the floor panel, and therefore, the cord-shaped structure can be prevented from coming into contact with nearby members and deteriorating when the seat section is moved.

It is preferable that, when the seat section is moved forward and downward by the movement mechanism, at least a portion of the guide member is adjacent to a lower side of the cord-shaped structure.

This configuration can prevent, in particular, deterioration of the cord-shaped structure due to contact with the floor panel under the cord-shaped structure when the seat section is moved forward and downward.

It is preferable that the guide member is a belt-shaped member that is wider than the cord-shaped structure. A belt-shaped guide member easily deforms when the seat section is moved and covers a wide range of the cord-shaped structure, and therefore has a high effect of protecting the cord-shaped structure.

It is preferable that the vehicle seat structure further includes a car body fixing member fixing the guide member to the floor panel at a position spaced apart from the buckle in a front-rear direction, and the guide member has a width arranged along a vehicle width direction while extending from the floor panel to a predetermined position before reaching the buckle, is twisted from that position, and has a width arranged along the front-rear direction of the vehicle when reaching the buckle.

This configuration is adopted because the belt-shaped guide member needs to be twisted at an intermediate position. That is to say, in the vicinity of the floor panel, the guide member needs to be positioned in such a manner as to extend horizontally and have its width in the vehicle width direction in order to protect the cord-shaped structure from the floor panel by extending beside the lower side of the cord-shaped structure particularly when the seat section is moved forward and downward. On the other hand, in order to join the guide member to the buckle, the guide member needs to be positioned in such a manner as to have its width in the vehicle front-rear direction, i.e., extend in parallel with the lateral side of the seat section. Therefore, the guide member needs to be twisted at the predetermined position described above.

It is preferable that the car body fixing member includes an engaging portion with which the guide member engages, and the engaging portion is inclined from the floor panel toward the buckle.

In this configuration, the engaging portion is inclined, and therefore, the guide member is spaced apart from the floor panel even when the seat section is moved forward and downward. Accordingly, the cord-shaped structure is kept apart from the floor panel and more reliably protected.

Moreover, the inclined engaging portion prevents the guide member from sagging by a large amount before and after the movement of the seat section, and therefore, displacement of the cord-shaped structure can be suppressed.

It is preferable that the cord-shaped structure is adjacent to the car body fixing member side of the guide member having the width in the front-rear direction of the vehicle when reaching the buckle.

This configuration makes it possible to reduce the length of the cord-shaped structure and to avoid an upper portion of the cord-shaped structure from coming into contact with nearby members.

Another embodiment of the present invention is a vehicle seat structure including: a seat including a seat section on which an occupant of a vehicle sits and a seat back arranged upright from a rear portion of the seat section to support the back of the occupant; a movement mechanism for inclining the seat back forward and moving the seat section forward and downward; a buckle that is disposed on a lateral side of the seat section and to which a tongue of a seat belt for the occupant can be attached; and a cord-shaped structure routed from the buckle toward a floor panel, the vehicle seat structure being characterized in further including a flexible belt-shaped restriction member covering the buckle in a front-rear direction and fixed to the lateral side of the seat section in front of and behind the buckle to restrict the buckle to the lateral side of the seat section.

According to the present invention, it is possible to more reliably protect the cord-shaped structure by restricting unexpected displacement of the buckle from a predetermined position on the lateral side of the seat section with use of the restriction member.

It is preferable that the vehicle seat structure further includes a recessed portion in the lateral side of the seat section, and the buckle is inserted into the recessed portion and restricted by the restriction member. In this configuration, displacement of the buckle can be more reliably restricted by the recessed portion.

It is preferable that a seat frame member constituting the seat section is disposed under the buckle. In this configuration, the buckle can be supported by the rigid seat frame member, and displacement of the buckle in the up-down direction can be restricted, and accordingly, displacement of the cord-shaped structure can be suppressed.

It is preferable that the seat frame member is retreated from the lateral side of the seat section to form a path for the cord-shaped structure routed from the buckle between the seat frame member and the lateral side of the seat section.

In this configuration, the cord-shaped structure can be drawn downward from a lower portion of the buckle, and therefore, it is possible to secure the effect of suppressing displacement of the cord-shaped structure by restricting displacement of the buckle in the up-down direction with use of the seat frame member, and furthermore, it is possible to suppress deterioration of the cord-shaped structure by suppressing deformation and displacement of the cord-shaped structure.

It is preferable that a portion of the buckle restricted by the restriction member protrudes upward from a seat surface of the seat section, and, when the seat back is inclined forward to the extent possible by the movement mechanism, the seat back comes into contact with the buckle or is spaced apart from the buckle by a predetermined distance.

In this configuration, the tongue of the seat belt can be easily attached to the protruding buckle, and downward displacement of the buckle at the time when the seat back is inclined forward can be prevented.

### Example

The following describes a preferred embodiment of the present invention in detail with reference to the attached drawings. Dimensions, materials, other specific numerical values, and the like referred to in the embodiment are merely examples for facilitating understanding of the invention, and do not limit the invention unless otherwise stated. In the present specification and the drawings, elements that have substantially the same function and configuration are denoted by the same reference numerals to omit redundant descriptions thereof, and illustration of elements that do not directly relate to the present invention is omitted.

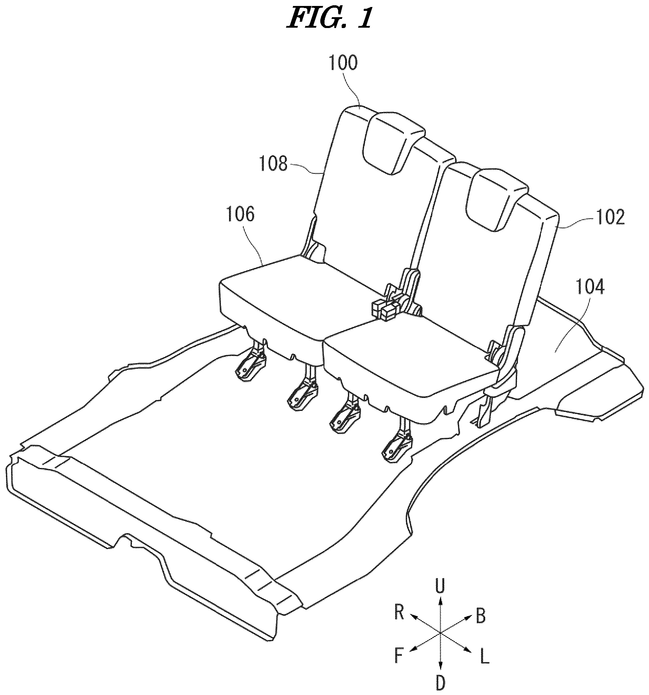

FIG. 1 is a perspective view showing an embodiment of a vehicle seat structure according to the present invention. In FIG. 1 and all the other drawings, the front side and the rear side of the vehicle are respectively indicated by arrows F (Forward) and B (Backward), the left side and the right side in the vehicle width direction are respectively indicated by arrows L (Leftward) and R (Rightward), and the upper side and the lower side are respectively indicated by arrows U (Upward) and D (Downward).

### Vehicle Seat

As shown in FIG. 1, the embodiment of the present invention will be described using seats 100 and 102 in the rearmost row among seats arranged in three rows. In FIG. 1, illustration of seats in the two front rows is omitted. The structures of the seats 100 and 102 are substantially symmetrical in the left-right direction, and therefore, the present embodiment will be described below using the seat 100 unless otherwise stated. The seat 100 is placed on a floor panel 104 and includes a seat section 106 on which an occupant of the vehicle sits and a seat back 108 arranged upright from a rear portion of the seat section 106 to support the back of the occupant.

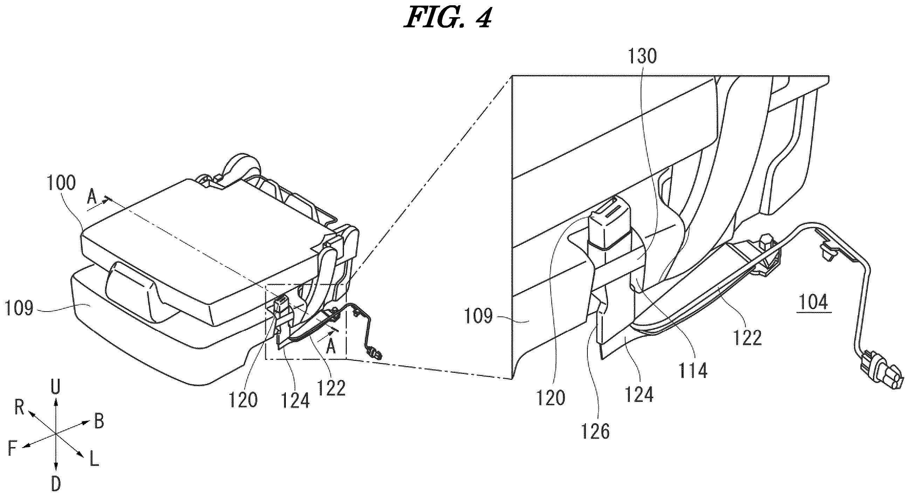

Note that the seat 100 is actually covered with a seat cover 109 formed from leather or cloth, but illustration of the seat cover 109 is omitted, except in FIG. 4, which will be described later.

### Movement Mechanism

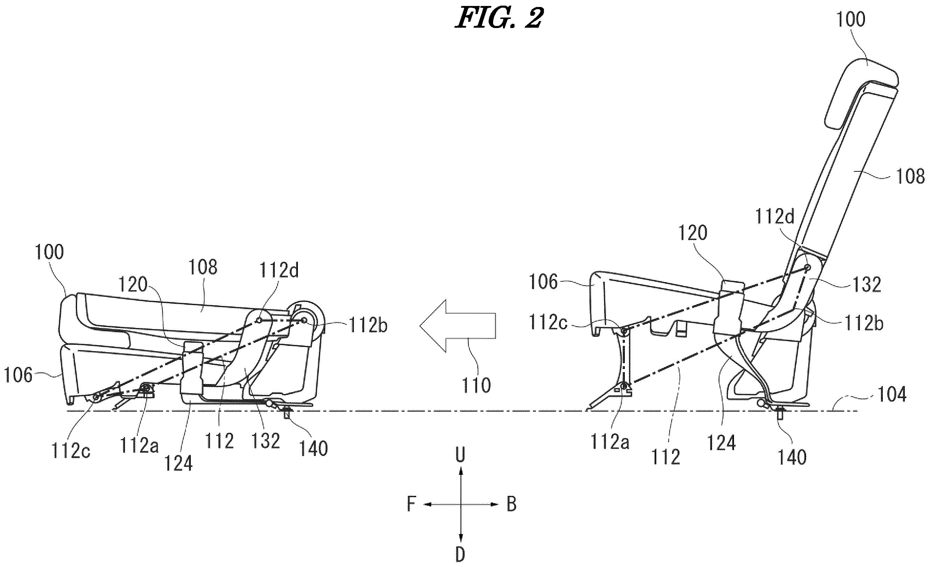

FIG. 2 is a side view showing a state before the seat back 108 of the seat 100 shown in FIG. 1 is inclined forward and a state after the seat back 108 is inclined forward. As indicated by an arrow 110 in FIG. 2, the right part and the left part of FIG. 2 respectively show the state before the seat back 108 is inclined forward and the state after the seat back 108 is inclined forward. A movement mechanism 112 for inclining the seat back 108 forward is a link mechanism that includes four links (bars) shown by the dot-dashed phantom lines.

The movement mechanism 112 includes four joints 112a, 112b, 112c, and 112d about which the links turn, and the positions of the two joints 112a and 112b do not change in the front-rear direction when the seat back 108 is inclined forward. On the other hand, when the seat back 108 is inclined forward, the joint 112c provided on the seat section 106 moves forward and downward as shown in the left part of FIG. 2. As described above, when the seat back 108 is inclined forward, the seat section 106 moves forward and downward.

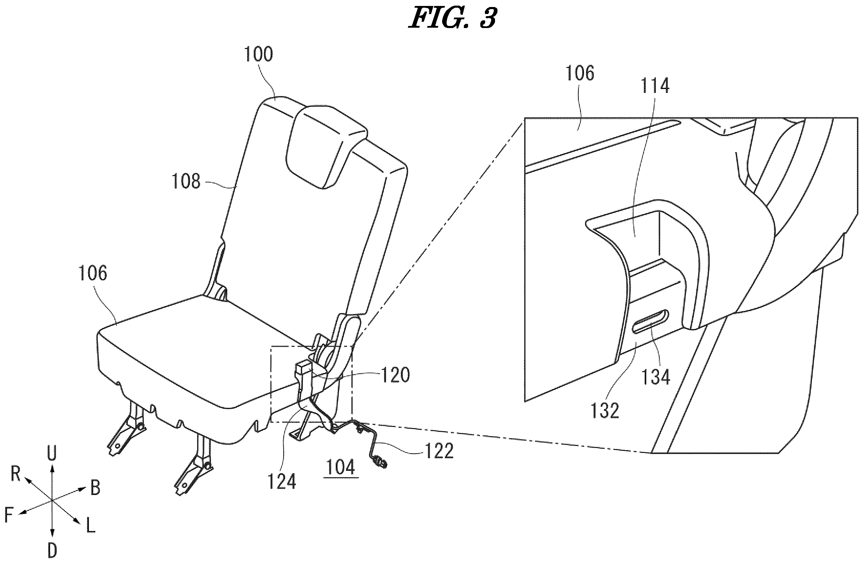

FIG. 3 is a perspective view and an enlarged partial view of the seat 100 shown in FIG. 1. As shown in the enlarged partial view, a recessed portion 114 that is recessed in the vehicle width direction is formed in a lateral side of the seat section 106. The recessed portion 114 is made of resin and fitted in the seat section 106. As shown in the left part of FIG. 3 showing the entire seat 100, a buckle 120 is inserted into the recessed portion 114. Note that illustration of the buckle 120 is omitted in the enlarged partial view shown in the right part of FIG. 3 for the sake of convenience of illustration of the recessed portion 114. The buckle 120 is a device to which a tongue (not shown) of a seat belt for an occupant is attached to restrict the occupant with the seat belt.

The buckle 120 is inserted into the recessed portion 114 provided in the lateral side of the seat section 106 as shown in FIG. 3, and therefore, when the seat section 106 moves forward and downward as shown in FIG. 2, the buckle 120 also moves forward and downward.

### Wire Harness

FIG. 4 is a perspective view and an enlarged partial view of the seat 100 in the state where the seat section 106 has moved forward and downward as shown in the left part of FIG. 2. Unlike the other drawings, FIG. 4 shows the seat 100 covered with the seat cover 109 formed from leather or cloth. That is to say, the seat section 106 and the seat back 108 are covered with the seat cover 109. In particular, the seat section 106 including the recessed portion 114 provided in the lateral side of the seat section 106 is covered with the seat cover 109.

As shown in FIGS. 2 to 4, a wire harness 122, which is a cord-shaped structure, is routed from the buckle 120 toward the floor panel 104. The wire harness 122 is a signal transmission wire for transmitting signals to be used to detect whether or not the seat belt is worn. However, there is no limitation to such a signal transmission wire, and the wire harness may also be a power transmission wire for supplying power to an electric lock mechanism that automatically locks the tongue attached to the buckle 120, for example. Moreover, there is no limitation to the cord-shaped structure such as the wire harness 122, and the present embodiment may also be applied to a tubular member such as a fluid path member (tube) for sending a fluid (air or air-conditioned air) to the seat section 106, for example, or a string member.

As shown in FIGS. 2 to 4, a guide member 124 extends beside the wire harness 122 from the buckle 120 to the floor panel 104. The guide member 124 is a flexible member guiding the route of the wire harness 122. The guide member 124 is a belt-shaped member that is wider than the wire harness.

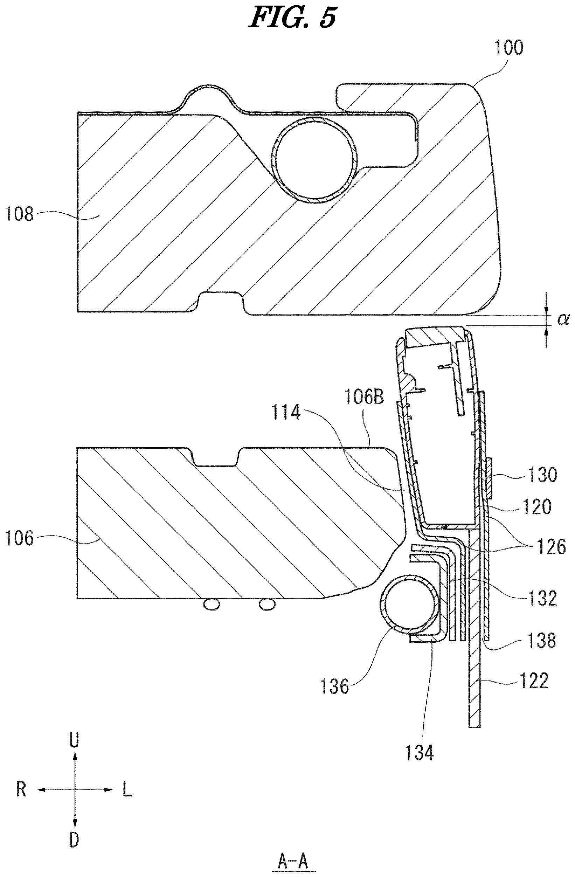

FIG. 5 is a cross-sectional view of the seat 100 taken along the line A-A in FIG. 4. As shown in FIGS. 4 and 5, the buckle 120, the wire harness 122, and the guide member 124 are bound together with a binding member 126 that surrounds and covers these three elements.

### Restriction Member

As shown in FIGS. 4 and 5, the buckle 120 bound with the binding member 126 described above is restricted by a flexible belt-shaped restriction member 130 covering the buckle 120 in the front-rear direction. The restriction member 130 is fixed to a lateral side of a seat cushion in front of and behind the buckle 120. More specifically, the restriction member 130 is actually fixed to the seat cover 109 (see FIG. 4, not shown in FIG. 5) formed from leather or the like and covering the seat section 106. With this configuration, the restriction member 130 restricts the buckle 120 to the lateral side of the seat section 106.

As already described, the buckle 120 moves forward and downward when the seat section 106 moves forward and downward as shown in FIG. 2. However, if the buckle 120 is unexpectedly displaced from its predetermined position on the lateral side of the seat section 106, the wire harness 122 may be pulled in an unexpected direction, and may come into contact with nearby members and be damaged or deteriorate. Therefore, in order to more reliably protect the wire harness 122, the buckle 120 is restricted by the restriction member 130 in the present embodiment so as not to move from the predetermined position on the lateral side of the seat section 106.

### Recessed Portion

Also, the buckle 120 is inserted into the recessed portion 114 and restricted by the restriction member 130 as shown in FIGS. 4 and 5. In the present embodiment, displacement of the buckle 120 in the front-rear direction can be restricted more reliably by the recessed portion 114.

Note that as long as the buckle 120 can be reliably restricted to the lateral side of the seat section 106 by the restriction member 130, it is not essential to provide the recessed portion 114. To the contrary, as long as the recessed portion 114 can reliably hold the buckle 120 on the lateral side of the seat section 106, it is not essential to provide the restriction member 130.

In the present embodiment, the buckle 120 is accommodated in the recessed portion 114 in such a manner as not to protrude from the lateral side of the seat section 106 in the vehicle width direction. However, the space in the recessed portion 114 for housing the buckle 120 may have a depth that is smaller than the thickness of the buckle 120 in the vehicle width direction so that the buckle 120 protrudes from the lateral side of the seat section 106 in the vehicle width direction. In this case, the buckle 120 may be pressed with the restriction member 130 to elastically deform wall surfaces forming the recessed portion 114 and house the buckle 120 in the recessed portion 114.

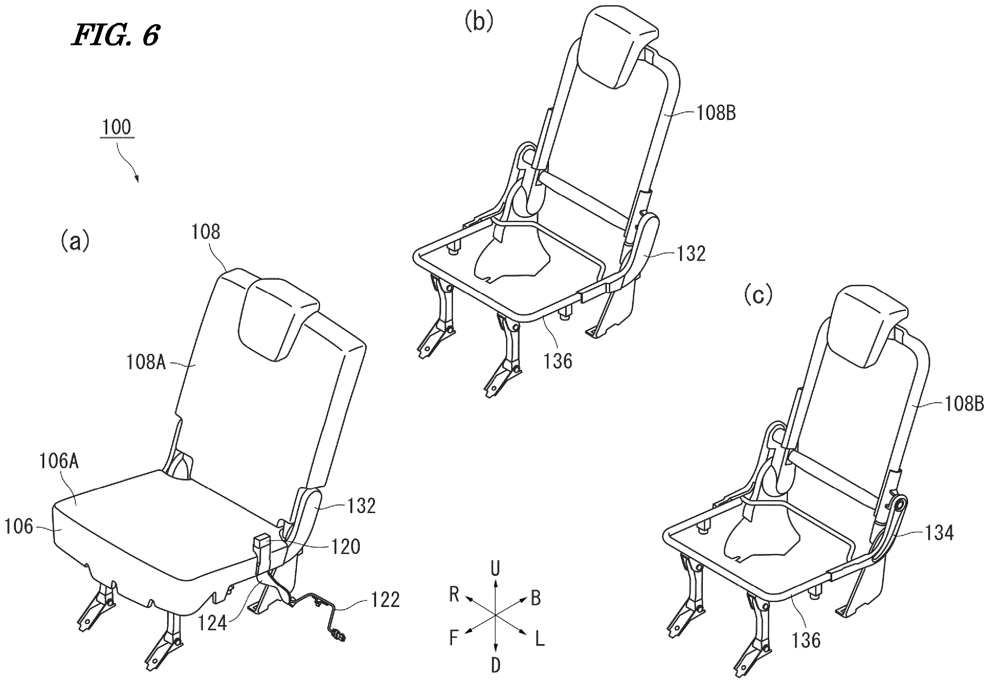

FIG. 6 is a perspective view showing an internal structure of the seat 100 shown in FIG. 3. FIG. 6(a) shows an external appearance of the seat 100, FIG. 6(b) shows the internal structure of the seat 100 in a state where a seat cushion 106A and a seat back cushion 108A are respectively removed from the seat section 106 and the seat back 108 shown in FIG. 6(a), and FIG. 6(c) shows the internal structure in a state where a frame cover 132 shown in FIG. 6(b) is further removed.

The seat section 106 includes the seat cushion 106A, which is covered with the seat cover 109 (see FIG. 4, not shown in FIG. 6), and a seat section pipe 136 supporting the seat cushion 106A. The seat back 108 includes the seat back cushion 108A, which is covered with the seat cover 109, and a seat back pipe 108B supporting the seat back cushion 108A.

### Seat Frame Member

As shown in FIGS. 6(b) and 6(c), the frame cover 132 covers a seat section frame 134 extending from the seat back 108 to the seat section 106. The seat section frame 134 covers the seat section pipe 136, and both the seat section frame 134 and the seat section pipe 136 are frame members constituting the seat 100. A lower portion of the seat section frame 134 is jointed to the seat section pipe 136, and an upper portion of the seat section frame 134 is supported in a turnable manner by the seat back pipe 108B. With this configuration, the seat section frame 134 constitutes the joint 112b included in the movement mechanism 112.

As shown in FIG. 3, the frame cover 132 and the seat section frame 134 are located in the lower half of the recessed portion 114 and recessed toward the right side of the vehicle from the lateral side of the seat section 106, but are not recessed toward the right side as much as the recessed portion 114.

As shown in FIG. 5, the seat frame members constituting the seat section 106, i.e., the seat section frame 134 and the seat section pipe 136 are disposed under the buckle 120. With this configuration, the buckle 120 can be supported by the rigid seat section frame 134 and seat section pipe 136 (seat frame members), and displacement of the buckle 120 in the up-down direction can be restricted, and accordingly, displacement of the wire harness 122 can be suppressed.

Moreover, the seat section frame 134 and the seat section pipe 136 (seat frame members) are recessed toward the right side of the vehicle from the lateral side of the seat section 106 as described above with reference to FIG. 3. Therefore, a path 138 for the wire harness 122 routed from the buckle 120 is formed between the lateral side of the seat section 106 and the seat section frame 134 and the seat section pipe 136.

In this configuration, the wire harness 122 can be drawn downward from a lower portion of the buckle 120 as shown in FIG. 5. Therefore, it is possible to secure the effect of suppressing displacement of the wire harness 122 by restricting displacement of the buckle 120 in the up-down direction with use of the seat section frame 134 and the seat section pipe 136 (seat frame members). Furthermore, it is possible to suppress deterioration of the wire harness 122 by suppressing deformation and displacement of the wire harness 122.

### Positional Relationship between Buckle Protruding Upward and Seat Back

As shown in FIG. 5, a portion of the buckle 120 restricted by the restriction member 130 protrudes upward from a seat surface 106B of the seat section 106. On the other hand, when the seat back 108 is inclined forward to the extent possible by the movement mechanism 112, a predetermined distance a is secured between the buckle 120 and the seat back 108.

In this configuration, the buckle 120 protrudes upward from the seat surface 106B of the seat section 106, and therefore, the tongue of the seat belt can be easily attached to the buckle 120. Also, downward displacement of the buckle 120 at the time when the seat back 108 is inclined forward is prevented due to the distance α being secured. Note that it is not essential to secure the distance α, and the seat back 108 may exactly come into contact with the buckle 120.

### Guide Member

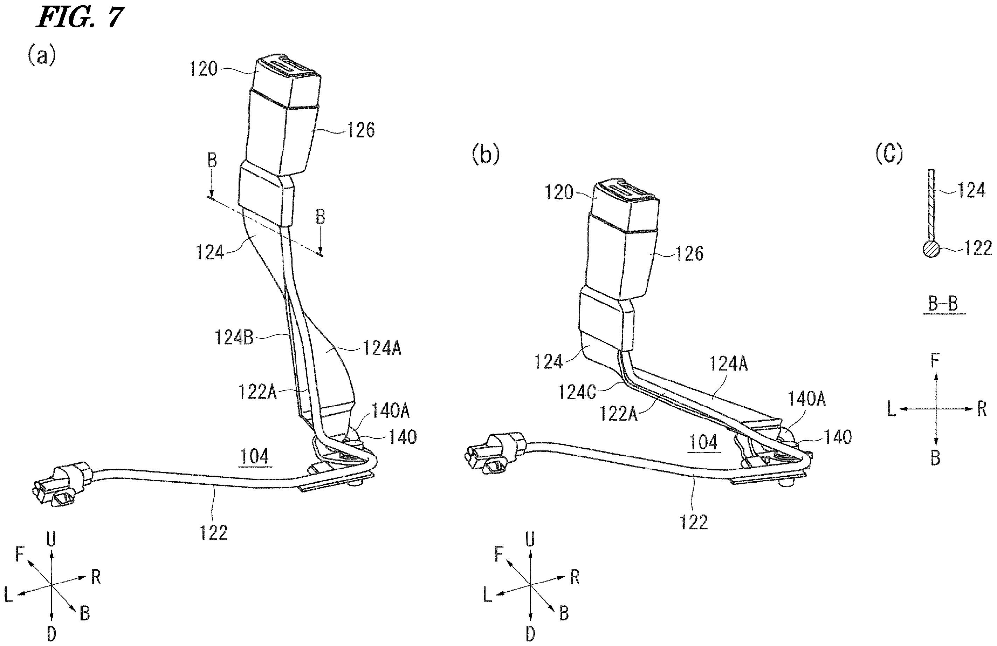

FIG. 7 is a perspective view showing the guide member 124 in the state before the seat section 106 moves forward and downward and the state after the seat section 106 moves forward and downward as shown in FIG. 2. Unlike FIG. 2, FIG. 7 shows the guide member 124 as viewed from the rear left side of the vehicle. FIG. 7 (a) corresponds to the state before the seat section 106 moves forward and downward, and FIG. 7(b) corresponds to the state after the seat section 106 moves forward and downward as shown in FIG. 2. FIG. 7(c) shows a cross-sectional view of the guide member 124 and the wire harness 122 along the line B-B in FIG. 7(a).

As shown in FIG. 7, the guide member 124 is fixed to the floor panel 104 by a car body fixing member 140.

In the present embodiment, the flexible guide member 124 extends beside the wire harness 122 from the buckle 120 to the floor panel 104 as shown in FIG. 7. Therefore, it is possible to prevent deterioration of the wire harness 122 due to contact with nearby members when the seat section 106 moves.

In particular, a portion 122A of the wire harness 122 other than a portion right under the buckle 120 and a portion extending from the car body fixing member 140 for the guide member 124 extends upward as shown in FIG. 7(a) before the seat section 106 moves forward and downward, but this portion 122A extends almost horizontally as shown in FIG. 7(b) after the movement of the seat section 106.

A portion 124A of the guide member 124 is adjacent to a lower side of the portion 122A of the wire harness 122 when it extends almost horizontally. As described above, when the portion 122A of the wire harness 122, whose positional change amount is the largest among the portions of the wire harness 122, comes closest to the floor panel 104, the guide member 124 is adjacent to the lower side of the portion 122A and prevents deterioration of the wire harness 122 due to contact with the floor panel 104 under the wire harness 122.

Moreover, the guide member 124 is a belt-shaped member, and accordingly, easily deforms when the seat section 106 is moved and covers a wide range of the wire harness 122, and therefore has a high effect of protecting the wire harness 122.

As shown in FIGS. 2 and 7, the car body fixing member 140 described above fixes the guide member 124 to the floor panel 104 at a position spaced apart from the buckle 120 to the rear side of the vehicle. The guide member 124 is twisted from a position 124B or 124C in such a manner as to have a width arranged along the vehicle width direction while extending from the floor panel 104 to the position 124B or 124C before reaching the buckle 120, and have a width arranged along the vehicle front-rear direction when reaching the buckle 120. The position from which the guide member 124 is twisted slightly changes to the position 124B or the position 124C between before and after the seat section 106 moves forward and downward.

The configuration in which the belt-shaped guide member is twisted as described above is adopted because the guide member needs to be twisted for the following reason. In the vicinity of the floor panel 104, the guide member 124 protects the wire harness 122 from the floor panel 104 by extending beside the lower side of the wire harness 122 particularly when the seat section 106 is moved forward and downward. Therefore, the guide member 124 needs to be positioned in such a manner as to extend horizontally and have its width in the vehicle width direction. On the other hand, in order to join the guide member 124 to the buckle 120, the guide member 124 needs to be positioned in such a manner as to have its width in the vehicle front-rear direction, i.e., extend in parallel with the lateral side of the seat section 106. Therefore, the guide member 124 needs to be twisted at the position 124B or 124C described above.

### Car body fixing Member and Engaging Portion

As shown in FIG. 7, the above-described car body fixing member 140 includes an engaging portion 140A with which the guide member 124 engages. The engaging portion 140A is inclined forward and upward from the floor panel 104 toward the buckle 120.

The engaging portion 140A is inclined as described above, and therefore, the guide member 124 is spaced apart from the floor panel 104 even when the seat section 106 has moved forward and downward as shown in FIG. 7(b). Accordingly, the wire harness 122 is kept apart from the floor panel 104 and more reliably protected.

Also, the inclined engaging portion 140A prevents the guide member 124 from sagging by a large amount before and after the movement of the seat section 106 as shown in FIG. 7(a), and therefore, displacement of the wire harness 122 can be suppressed.

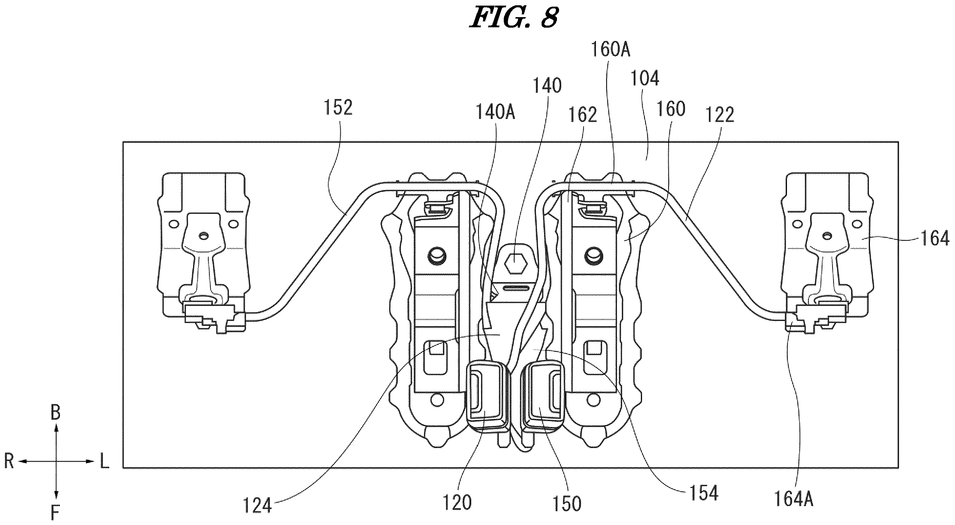

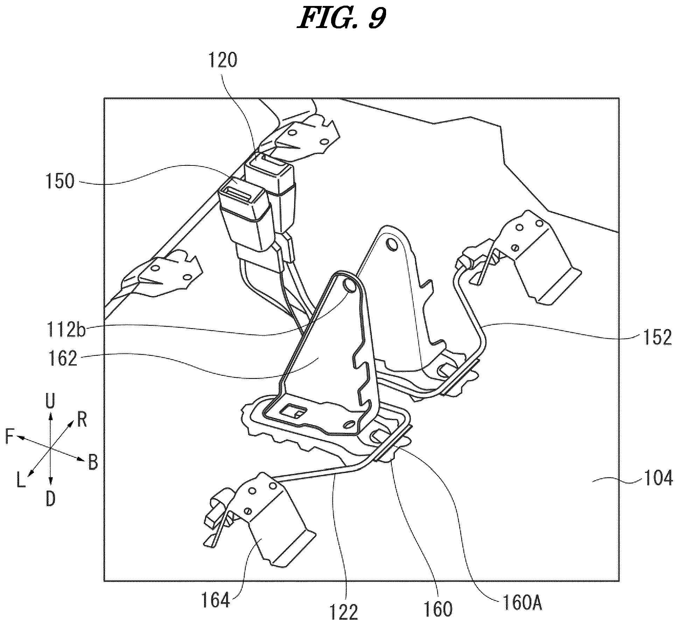

FIG. 8 is a plan view of the wire harness 122 and the guide member 124 shown in FIG. 7(a) as viewed from above. FIG. 9 is a perspective view of the wire harness 122 and the guide member 124 shown in FIG. 8 as viewed from a different direction. FIGS. 8 and 9 also show a buckle 150, a wire harness 152, and a guide member 154 for the seat 102 shown in FIG. 1, but configurations of these are similar to the configurations of the corresponding members for the seat 100, and therefore, descriptions thereof are omitted.

As shown in FIG. 7(c), the wire harness 122 is adjacent to the car body fixing member 140 side, i.e., the rear side in the present embodiment, of the guide member 124 having its width in the vehicle front-rear direction when reaching the buckle 120. This applies not only to the state before the movement of the seat section 106 shown in FIG. 7(a) but also to the state after the movement of the seat section 106 shown in FIG. 7(b).

This configuration makes it possible to reduce the length of the wire harness 122 and to avoid an upper portion of the wire harness 122 protected by an upper portion of the guide member 124, which has its width in the vehicle front-rear direction, from coming into contact with nearby members.

Note that the wire harness 122 is also fixed to the floor panel 104 and pulled rearward by a seat support bracket 160 as shown in FIGS. 8 and 9, and therefore, the wire harness 122 does not sag to the front side of the guide member 124. Also, the wire harness 122 is spaced apart from the floor panel 104 by the seat support bracket 160 so as not to come into contact with the floor panel 104. The wire harness 122 is also protected with this configuration.

As shown in FIGS. 8 and 9, a support member 162 supporting the seat 102 is fixed to the floor panel 104 via the seat support bracket 160. An upper portion of the support member 162 constitutes the joint 112b included in the movement mechanism 112.

A harness support bracket (cord-shaped structure support bracket) 164 supporting the wire harness 122 is provided on an outer side of the support member 162 and the seat support bracket 160 in the vehicle width direction.

As shown in FIG. 8, the wire harness 122 is supported by a front surface of the harness support bracket 164 on the front side of a wire harness supporting position 160A on the seat support bracket 160 as viewed from above.

In this configuration, the seat support bracket 160 and the harness support bracket 164 suppress displacement of the wire harness 122 on the floor panel 104 side when the seat section 106 is moved forward and downward from its initial position. Also, the wire harness 122 can be kept from coming into contact with components of the vehicle, luggage, or the like disposed behind the seat section 106.

Furthermore, the wire harness supporting position 160A on the seat support bracket 160 and a supporting position 164A on the harness support bracket 164 are set to be higher than the floor panel 104. Therefore, at least a portion of the wire harness 122 can be spaced apart from the floor panel 104, and sliding contact and other contact between the wire harness 122 and the floor panel 104 can be suppressed.

Although a preferred embodiment of the present invention has been described with reference to the attached drawings, it goes without saying that the present invention is not limited to this example. It is clear that those skilled in the art will be able to arrive at various changes and modifications within the scope of the claims, and those changes and modifications are understood to naturally fall within the technical scope of the present invention.

Also, it is possible to embody the present invention by freely combining inventions described in the claims and in the Example, irrespective of the dependency of the claims.

### [Industrial Applicability]

The present invention is applicable to a vehicle seat structure.

### LIST OF REFERENCE NUMERALS

100, 102 ... seat; 104 ... floor panel; 106 ... seat section; 106A... seat cushion; 106B ... seat surface; 108 ... seat back; 108A ... seat back cushion; 109 ... seat cover; 112 ... movement mechanism; 114 ... recessed portion; 120, 150 ... buckle; 122, 152 ... wire harness; 124, 154 ... guide member; 126 ... binding member; 130 ... restriction member; 132 ... frame cover; 134 ... seat section frame; 136 ... seat section pipe; 140 ... car body fixing member; 140A ... engaging portion; 160 ... seat support bracket; 162 ... support member; 164 ... harness support bracket

## Claims

1. A vehicle seat structure comprising:
a seat (100, 102) that includes a seat section (106) on which an occupant of a vehicle sits and a seat back (108) arranged upright from a rear portion of the seat section (106) to support the back of the occupant;
a movement mechanism (112) for inclining the seat back (108) forward and moving the seat section (106) forward and downward;
a buckle (120, 150) that is disposed on a lateral side of the seat section (106) and to which a tongue of a seat belt for the occupant can be attached;
a cord-shaped structure (122, 152) routed from the buckle (120, 150) toward a floor panel (104); and
a flexible belt-shaped restriction member (130) covering the buckle (120, 150) in a front-rear direction and fixed to the lateral side of the seat section (106) in front of and behind the buckle (120, 150) to restrict the buckle (120, 150) to the lateral side of the seat section (106).

2. The vehicle seat structure according to claim 1, further comprising:
a recessed portion (114) in the lateral side of the seat section (106),
wherein the buckle (120, 150) is inserted into the recessed portion (114) and restricted by the restriction member (130).

3. The vehicle seat structure according to claim 1 or 2,
wherein a seat frame member (134, 136) constituting the seat section (106) is disposed under the buckle (120, 150).

4. The vehicle seat structure according to claim 3,
wherein the seat frame member (134, 136) is retreated from the lateral side of the seat section (106) to form a path (138) for the cord-shaped structure (122, 152) routed from the buckle (120, 150) between the seat frame member (134, 136) and the lateral side of the seat section (106).

5. The vehicle seat structure according to any one of claims 1 to 4,
wherein a portion of the buckle (120, 150) restricted by the restriction member (130) protrudes upward from a seat surface (106B) of the seat section (106), and
when the seat back (108) is inclined forward to the extent possible by the movement mechanism (112), the seat back (108) comes into contact with the buckle (120, 150) or is spaced apart from the buckle (120, 150) by a predetermined distance.
